# EUROPEAN PATENT SPECIFICATION

(11) **EP 2 749 530 B1**
(45) Date of publication and mention of the grant of the patent: **24.01.2018**
(21) Application number: 12826254.0
(22) Date of filing: 07.02.2012
(51) Int. Cl.: B01J 2/20, C01B 32/942

(54) **PROCESS FOR PRODUCING CALCIUM CARBIDE GRANULES**
VERFAHREN ZUR HERSTELLUNG VON CALCIUMCARBIDGRANULAT
PROCÉDÉ DE PRODUCTION DE GRANULÉS DE CARBURE DE CALCIUM

(30) Priority: 25.08.2011 JP 2011183661
(43) Date of publication of application: 02.07.2014
(73) Proprietor: Denka Company Limited, Tokyo 103-8338 (JP)
(72) Inventor: TANIMURA, Kyoichi, Niigata 949-0393 (JP); KAMAMOTO, Junpei, Niigata 949-0393 (JP); KUBONO, Kouji, Niigata 949-0393 (JP); OMORI, Hiroaki, Niigata 949-0393 (JP); NAGASAKI, Shunichi, Niigata 949-0393 (JP)
(74) Representative: Gauer, Pierre
(86) International application number: PCT/JP2012/052716
(87) International publication number: WO 2013/027426

(56) References cited:
- DE-A1- 2 037 758
- FR-A1- 2 482 578
- FR-A1- 2 856 611
- JP-A- S5 717 413
- JP-A- S5 888 112
- JP-A- S61 178 412
- JP-A- 2004 082 045
- JP-A- 2004 082 045
- JP-B- S3 513 471
- JP-B1- S 554 688
- "Calcium Carbide Detailed Project Report Corporate Office", , 9 December 2010 (2010-12-09), XP055181678, Retrieved from the Internet: URL:http://www.ascconline.com/img/services /project_report/Calcium_Carbide_Project_Re port_Sample.pdf [retrieved on 2015-04-08]

## Description

### BACKGROUND OF THE INVENTION

The invention relates to a method for producing calcium carbide granules, and more particularly calcium carbide granules suitable for dry acetylene generation.

When calcium carbide (hereinafter referred to as merely "carbide") is supplied to an acetylene generator for dry acetylene generation, carbide masses are preliminarily broken and then the resulting carbides are introduced into an impact crushing machine to be crushed in fines. This carbide is delivered to raw material sealing tanks located above acetylene generators. With regard to the carbide, as its granularity is finer, its reactivity at the acetylene being generated further increases, and the material sealing function to protect acetylene gas from flowing into a raw material sealing tank further improves because of the carbide densely contained in the raw material sealing tank. For this reason, conventionally, the granularity or granule size of the carbide was made as fine as possible by the crushing machine and a screen. With regard to the granularity of the carbide, Chinese Patent Document CN101100617A discloses that the granularity is 3 mm or less and 1 mm or less is 70 % or more. Further, conventionally, since the carbide is delivered to raw material sealing tanks by a screw conveyer, another screw conveyer is needed to return the carbide overflowing the raw material sealing tanks to intermediate tanks.

- [Patent Document 1]: Chinese Patent Document CN101100617A

German patent document DE 20 37 758 A1 discloses a method for producing calcium carbide including crushing said calcium carbide to a particle size comprised between 0,2 and 0,6 mm. However, the inventors have found out that, when the granularity of carbide is excessively fine, a reaction temperature at the acetylene being generated rises, increasing a security risk, and also a secondarily generated reaction such as acetylene polymerization increases, adversely affecting the yield of acetylene gas. Therefore, an object of the invention is to provide a calcium carbide granule producing method, which, in the dry acetylene generation, would not lead to an increased security risk due to raised reaction temperature, and would not increase a secondarily generated reaction such as acetylene polymerization and not have adverse influence on the yield.

### SUMMARY OF THE INVENTION

To solve the above-mentioned problems, in one aspect of the invention provides a method for producing calcium carbide granules wherein a content of the granules having granule size of 4 mm or more is 5 wt% or less and a content of the granules having granule size of 0.15 mm or less is 20 wt% or less. As a percentage of the carbide granules having a granule size of 4 mm or more increases, non-reactive carbide in an acetylene generator may increase, which may reduce the yield of acetylene gas. When the content of the carbide having a granule size of 0.15 mm or less exceeds 20 wt%, the reaction temperature of the acetylene being generated may rise, which may raise the security risk and increase secondarily generated reaction such as acetylene polymerization in the acetylene generator. This may also decrease the yield of the acetylene gas. Moreover, in the invention, an average granule size can be preferably set between 0.8 mm and 1.5 mm. When the average granule size of the carbide is less than 0.8 mm, the reaction temperature at the acetylene being generated may rise and the secondarily generated reaction may increase. On the other hand, when the average granule size exceeds 1.5 mm, the acetylene generation yield may be reduced.

According to the invention, the method for producing calcium carbide granules, wherein a content of the granules having granule size of 4 mm or more is 5 wt% or less and a content of the granules having granule size of 0.15 mm or less is 20 wt% or less, comprises:
A) crushing calcium carbides by an impact crushing machine;
B) passing the calcium carbide crushed by the impact crushing machine through a screen having a mesh size of 4 mm; and
C) reintroducing the calcium carbide remaining on the screen into the impact crushing machine again,
   wherein
   - the steps A, B and C are carried out in an inactive gas atmosphere, and
   - the granularity (granule size) as crushed by the impact crushing machine is controlled such that a calcium carbide amount *a* which is introduced into the impact crushing machine at the step A and a calcium carbine amount *b* which has passed through the screen at the step B have a relation of (*a-b*)/*b* = 1 to 2.5.

Even if the mesh size of the screen is 4 mm, a small amount of the carbide granules of 4 mm or more may pass through the screen. Carbide is easily weathered in air and tends to generate acetylene gas when the carbide is in contact with water. Thus, the operations for crushing, feeding and storing the carbide are carried out in an inactive gas atmosphere. As the inactive gas, nitrogen, helium and the like can be used.

The inventors have found out that a content of the carbide powders with a granule size of 0.15 mm or less can be suppressed to 20 wt% or less by crushing the granules relatively roughly by the impact crushing machine so that the crushed granularity is not excessively fine and intentionally a certain amount of the carbide cannot pass through the screen, and by returning the certain amount of the carbides to the impact crushing machine. That is, the impact crushing machine is operated with a circulation ratio = (*a-b*)/*b* = *c*/*b* = 1 to 2.5: where *a* denotes a carbide amount introduced into the impact crushing machine (introduced raw material amount); *b* denotes a carbide amount that has passed through the screen (production amount) with respect to the amount *a*; and *c* denotes a carbide amount that is returned to the impact crushing machine without having passed through the screen (circulation amount) with respect to the amount *a*. When the circulation ratio is less than 1, carbide powders having a granule diameter of 0.15 mm or less tend to increase in the crushing operation by the impact crushing machine, in which carbide powders with a particle size of 0.15 mm or less may exceed 20 wt%. On the other hand, when the circulation ratio exceeds 2.5, there is a tendency that the production efficiency of the carbide granules may decrease and carbide powders with a particle size of 4 mm or more may increase, in which they may exceed 5 wt%. Here, the amount of foreign substances such as iron matters, which are removed after passing through the impact crushing machine and before passing through the screen, may be ignored because the above amount is extremely small as compared with the carbide amount.

One embodiment of the invention includes a step of removing foreign substances from the calcium carbide after the step A and before the step B. This step removes iron matters and the like which may be included in the carbide. Thus, this removal would reduce the load of the impact crushing machine and net damage of the screen.

The method of the invention can be carried out in a system for producing calcium carbide granules, in an inactive gas atmosphere, wherein a content of granules having the granule size of 4 mm or more is 5 wt% or less and a content of the granules having granule size of 0.15 mm or less is 20 wt% or less, the system comprising: an impact crushing machine for crushing calcium carbides; a screen for passing the calcium carbide crushed by the impact crushing machine through it, the screen having a screen size of 4 mm; and a carbide return path for reintroducing the calcium carbide remaining on the screen into the crushing machine again. In the system for producing calcium carbide granules according to the method of the invention, granule sizes as crushed by the crushing machine are controlled such that a calcium carbide amount *a* which is introduced into the impact crushing machine and the calcium carbide amount *b* which has passed through the screen have a relation of (*a-b*)/*b* = 1 to 2.5. Moreover, the system can include a foreign substance removing machine (an iron removing machine and the like) for removing foreign substances from the calcium carbide between the impact crushing machine and the screen.

In the invention, the impact crushing machine can comprise: a rotor which a rotor which is rotatable around a rotor shaft and has a plurality of hitting members on the periphery of the rotor; breaking plates having uneven breaking liners on an arc-like inner side facing the rotor; and a means for oil cooling the rotor. As the means for oil cooling the rotor shaft, one that can pass a cooling oil through retainers in bearings for the rotor shaft and the like can be preferably used.

One embodiment of the invention includes a flow conveyer for feeding the calcium carbide which has passed through the screen to raw material sealing tanks via intermediate tanks, each of the raw material sealing tanks being associated with a dry acetylene generator, wherein the flow conveyer comprises: a casing which extends in the left-and-right direction; an upper forth path and a lower back path, which are partitioned in the up-and-down manner by a partition within the casing and are in communication with each other through a communicating port at a left or right end of the casing; and an inactive gas supplying means for supplying an inactive gas to the forth path so as to deliver the gas through in turn the forth path, the communicating port and then the back path, wherein the casing has an inlet of the calcium carbide at a part corresponding to the forth path, openings with which the raw material sealing tanks are connected, and an outlet of the calcium carbide, the openings and the outlet being at parts corresponding to the back path, and wherein the calcium carbide introduced to the forth path via the inlet is delivered through in turn the forth path, the communicating port and then the back path; the calcium carbide being delivered through the back path fills the raw material sealing tanks from the openings; and the calcium carbide overflowing the raw material sealing tanks is returned to one of more of the intermediate tanks from the outlet. The intermediate tanks are arranged between the screen and the flow conveyer and can serve to adjust a carbide amount to be sent to the raw material sealing tanks while storing the carbide granules. As the intermediate tanks, it is possible to use a tank for receiving the carbide from the screen and another separate tank for receiving the carbide returned from the flow conveyer. To feed the carbide from the intermediate tanks to the raw material sealing tanks, a feeding means (e.g. vertically feeder and the like) other than the above flow conveyer may be used. However, in an embodiment of the invention, the flow conveyer is used as a means for finally delivering the carbide to the raw material sealing tanks. Conventionally, two screw conveyers were needed for sending and returning carbide to and from the raw material sealing tanks. However, by using one flow conveyer including the forth and back paths together, it is possible to obtain an advantage such as reduced facility cost.

The method of the invention provides calcium carbide granules wherein a content of the granules having a granule size of 4 mm or more is 5 wt% or less and a content of the granules having a granule size of 0.15 mm or less is 20 wt% or less. The carbide in the granularity range (% is on the basis of the mass) would not raise the security risk because of a rise in the reaction temperature in dry acetylene generation. Also, this would not increase secondarily generated reaction such as acetylene polymerization and not have an adverse influence on the yield.

### BRIEF DESCRIPTION OF THE DRAWINGS

Fig. 1 is an explanation view showing a carbide granule producing system used according to an embodiment of the invention.
Fig. 2 is a front cross-section explanation view of an impact crushing machine.
Fig. 3 is a side cross-section explanation view of the impact crushing machine, to which a schematic oil circulation circuit is added.
Fig. 4 is a side cross-section explanation view of a flow conveyer.

### DETAILED DESCRIPTION OF THE INVENTION

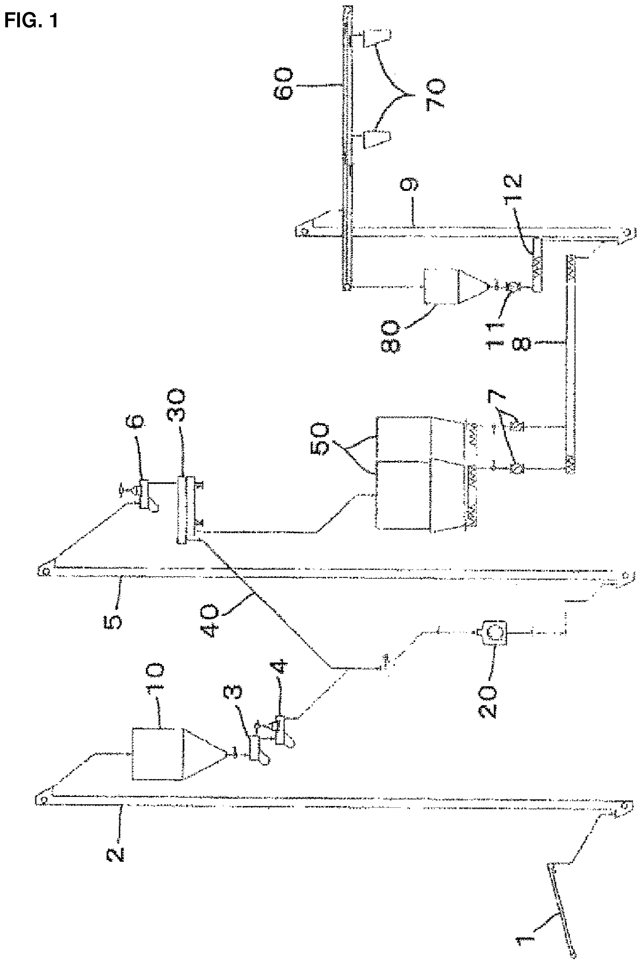

A preferable embodiment of the invention will be described below with reference to the drawings. However, the invention is not limited to the embodiment. Fig. 1 is an explanation view showing a carbide granule producing system used according to one embodiment of the invention. The carbide granule producing system is intended to produce carbide granules suitable for dry acetylene generation and to supply the produced carbide granules to dry acetylene generators (not shown). The system comprises: a stock tank 10 for receiving carbides via a receiving feeder 1 and a vertical feeder 2, the carbides having a granule size of 40 mm or less (a content of the granules having a granule size of 40 to 50 mm is 3 wt% or less) after carbide masses were preliminarily broken; an impact crushing machine 20 for crushing the carbides introduced from the stock tank 10; a screen 30 having a mesh size of 4 mm which is applied to the carbide crushed by the impact crushing machine 20; a return path 40 for reintroducing the carbide which has remained on the screen 30 into the impact crushing machine 20 again; and raw material tanks (first intermediate tanks) 50 for storing the carbide granules having passed through the screen 30. Between the stock tank 10 and the impact crushing machine 20 and between the impact crushing machine 20 and the screen 30, there are disposed magnet type iron removing machines 4 and 6 for removing foreign substances such as iron matters that may be included in the carbide. As iron matters are removed by the iron removing machines 4 and 6, the load of the impact crushing machine 20 and a possible break of the screen net can be reduced. The carbide granule producing system further includes a screw conveyer 8, a vertical feeder 9 and a flow conveyer 60, which serve to deliver the carbide granules from the raw material tanks 50 to raw material sealing tanks 70 associated with dry acetylene generators, and a return tank (second intermediate tank) 80 for storing the carbide granules which have overflowed the raw material sealing tanks 70. In this embodiment, there are a plurality of raw material sealing tanks 70, and each of the raw material sealing tank 70 is associated with each of the dry acetylene generator. In Fig. 1, the reference number 3 indicates a vibration feeder, the number 5 indicates a vertical feeder, the numbers 7 and 11 indicate rotary valves, and the number 12 indicates a screw conveyer. Two or more impact crushing machines 20 and two or more raw material tanks 50, etc. can be used in parallel. In the carbide granule producing system, the operations for crushing, feeding and storing the carbide are carried out in nitrogen atmosphere from which water component has been eliminated in order to avoid the weathering of carbide and the explosion of acetylene.

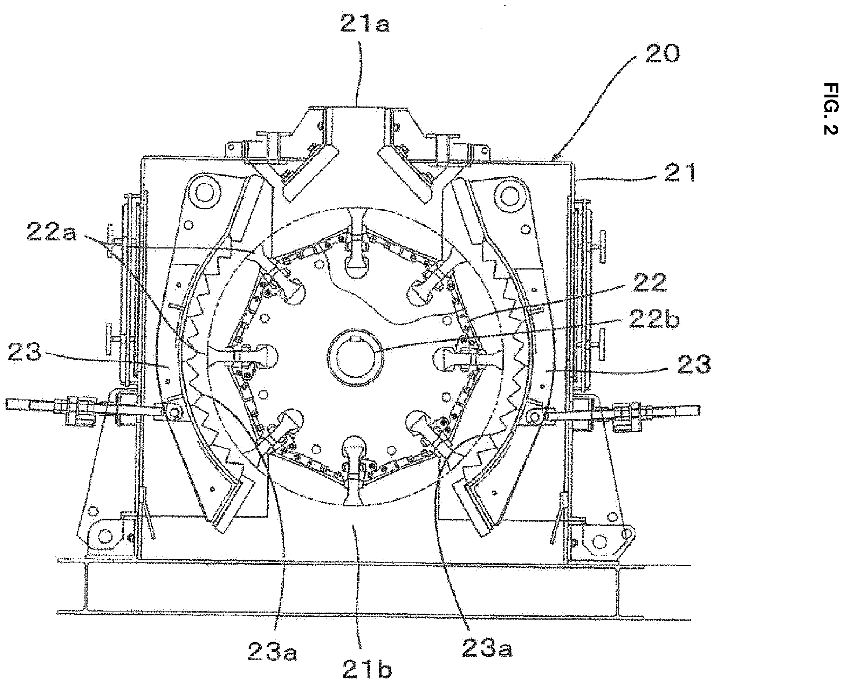

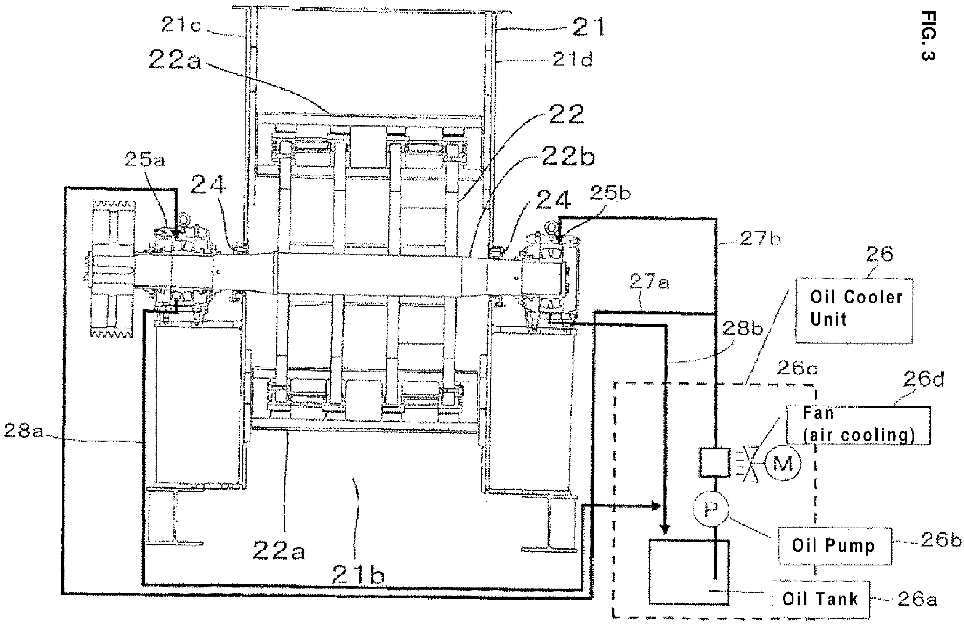

Figs. 2 and 3 are a front cross-section explanation view and a side cross-section explanation view of the crushing machine 20, respectively. The crushing machine 20 is one which is configured similarly to an impact type crushing machine as described in e.g. JP,2004-82045,A, in addition to an oil cooling mechanism added to the one as described later. The impact crushing machine 20 comprises: a box-shaped casing 21, which includes a feed port 21a at its top and a discharge port 21b at its bottom; a rotor 22 inside the casing 21, which has a plurality of (eight in Fig. 2) hitting plates 22a on its periphery and is rotatable around a rotor shaft 22b in one and the other directions; and breaking plates 23 that are disposed on the left and right sides of the rotor 22 within the casing 21 and have uneven breaking liners 23a with bumps and dips on their respective arc-like inner sides facing the rotor 22. In the impact crushing machine 20, the carbides fed from the feed port 21a is broken between the hitting plates 22a of the rotating rotor 22 and the breaking liners 23a of the breaking plates 23, and then discharged from the discharge port 21b. The target granularity of the carbide crushed by the impact crushing machine 20 can be set with a certain precision by adjusting the clearance between the hitting plates 22a of the rotor 22 and the breaking liners 23a of the breaking plates 23 and the rotation number of the rotor. The clearance between the hitting plates 22a and the breaking liners 23 can be adjusted separately in an upper stage (upper part) and a lower stage (lower part). In this embodiment, the impact crushing machine 20 is operated such that the carbides are crushed relatively roughly so that the crushed granularity is not excessively fine (carbide granules having a granule size of 0.15 mm or less will not exceed 20 wt%), and that a certain amount of the carbides will be circulated into the impact crushing machine 20 through the return path 40 without passing through the screen 30.

The carbide crushed by the impact crushing machine 20 is passed through the screen 30 after iron matters are removed by the iron removing machine 6. The screen 30 allows the carbide having a granule size of 0.4 mm or less to pass through it and does not allow the carbide with a granule size greater than 0.4 mm (a small amount of the carbide with a granule size above 4 mm may pass through the screen). The carbides which has remained on the screen 30 without passing through it are reintroduced into the impact crushing machine 20 through the return path 40. In this embodiment, the granularity (granule size) by the impact crushing machine is controlled to be a circulation ratio = (*a-b*)/*b* = *c*/*b* = 1 to 2.5: where *a* denotes a carbide amount introduced into the impact crushing machine 20 from the stock tank 10 (introduced raw material amount); *b* denotes a carbide amount that has passed through the screen 30 (production amount) with respect to the amount *a*; and *c* denotes a carbide amount that is returned to the impact crushing machine without having passed through the screen (circulation amount) with respect to the amount *a*. Here, the amount of foreign substances such as iron matters, which are removed after passing through the impact crushing machine and before passing through the screen, is ignored because the above amount is extremely small as compared with the carbide amount. Consequently, in the raw material tanks 50, there are stored the carbide granules in which a granule size of of 4 mm or more is 5 wt% or less; a granule size of 0.15 mm or less is 20 wt% or less; and an average granule size is between 0.8 mm and 1.5 mm.

In the impact crushing machine 20, to avoid the weathering of the carbide and the explosion of acetylene, the casing 21 is filled with nitrogen and hermetically sealed. Further, there are disposed ground packing members 24 (see Fig. 3) between a front wall 21c and a rear wall 21d of the casing 21 and the rotor shaft 22b respectively to enhance the sealing property. Also, there would be a danger such that the reducing tendency of the carbide increases if the temperature of the rotor shaft 22b rose due to the crushing heat from the carbide. To avoid this, the impact crushing machine 20 includes an oil circulation circuit (schematically shown in Fig. 3) as described below for oil cooling by introducing a lubricant oil through (the retainers of) the front and rear bearings 25a and 25b (see Fig. 3) and carrying out the oil cooling. The oil circulation circuit comprises: an oil cooler unit 26 disposed outside the casing 21 of the impact crushing machine 20; feed lines 27a and 27b for feeding the lubricant oil of a relatively low temperature to the front and rear bearings 25a and 25b, respectively, from the oil cooler unit 26; and return lines 28a and 28b for returning the lubricant oil from the front and rear bearings 25a and 25b to the oil cooler unit 26, the temperature of the returning oil being relatively high by heat exchanging with the bearings. The oil cooler unit 26 has: an oil tank 26a to which the feed lines 27a and 27b and the return lines 28a and 28b are connected; an oil pump 26b for sending the oil inside the oil tank 26a through the feed lines 27a and 27b; a heat exchanger 26c that is provided in the feeding lines 27a and 27b to cool the oil by heat exchanging with ambient air; and a fan 26d for blowing ambient air to the heat exchanger 26c. Since carbide is water-prohibitive, water cooling is unsuitable.

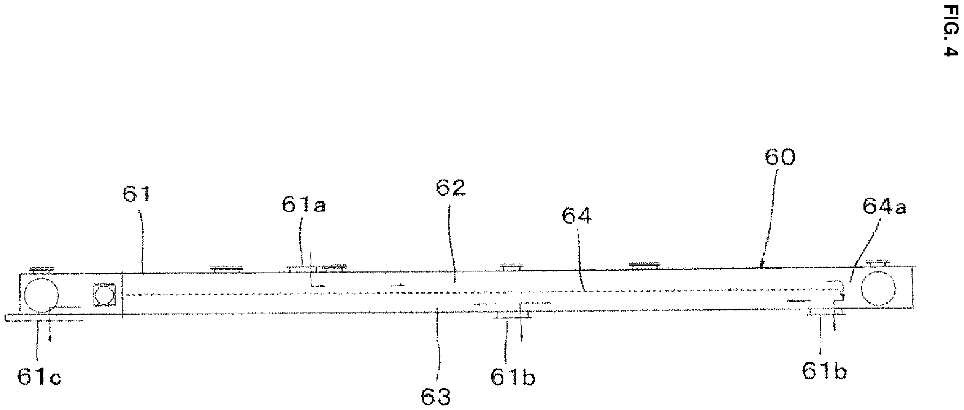

The carbide granules as stored in the raw material tanks 50 are supplied to a plurality of raw material sealing tanks 70 by the screw conveyer 8, the vertical feeder 9 and the flow conveyer 60 Each of the raw material sealing tanks 70 is associated with a dry acetylene generator unshown in a one-to-one relationship. Fig. 4 is a side explanation view of the flow conveyer 60. The flow conveyer 60 includes an upper forth path 62 and a lower back path 63, which are partitioned in the up-and-down manner by an intermediate partition 64 within a horizontally long casing 61 having a rectangular cross-section. The partition 64 is disconnected at a right end within the casing 61 so as to form a communicating port 64a through which the forth path 62 and the back path 63 are in communication with each other. In an upper wall of the casing 61, there is provided an inlet 61a for receiving the carbide granules from the vertical feeder 9. In a bottom wall of the casing 61, openings 61b and an outlet 61c are formed. Each of the openings 61b is connected with the upper end of each of the raw material sealing tanks 70. The outlet 61c is for returning the carbide granules which were not able to be contained in the raw material sealing tanks 70 to the return tank 80. The nitrogen is introduced by a nitrogen supply into the casing 61 through near the left end of the forth path 62. The nitrogen flows from the left to the right in the forth path 62, goes into the back path 63 through at the communicating port 64a, and then flows from the right to the left in the back path 63. By the nitrogen flowing, the carbide granules introduced from the inlet 61a into the forth path 62 are delivered to the communicating port 64a at the right side in the forth path 62 and then conveyed from the right side to the outlet 61c at the left side in the back path 63. When the carbide granules are being moved leftward in the back path 63, they fall into the raw material sealing tanks 70 through the openings 61b and then fill the tanks. The carbide granules overflowing the raw material sealing tanks 70 are delivered leftward in the back path 63 and then returned to the return tank 80 through the outlet 61c. Each of the raw material sealing tanks 70 is always filled with the carbide granules, and such carbides as densely contained can function as a material seal for protecting acetylene gas from flowing into the raw material sealing tanks 70. The carbide granules returned to the return tank 80 are properly reintroduced to the raw material sealing tanks 70.

### EXAMPLES

### Example 1

In the above-mentioned impact crushing machine 20, the clearance of the upper stage between the hitting plates 22a of the rotor 22 and the breaking liners 23a of the breaking plates 23 was set to 50 mm, the clearance of the lower stage was set to 30 mm, and the rotation number of the rotor 22 was set to 45 m/s (650 rpm). Then, the carbides were introduced at 40 t/h from the feed port 21a. The carbide amount that has passed through the screen 30 after being crushed by the impact crushing machine 20 became 15 t/h, and therefore the circulation ratio was (40-15)/15 = about 1.7. The table 1 shows a granularity (granule size) distribution (based on the mass) of the carbide granules (having passed through the screen 30) obtained by operating the impact crushing machine 20 for a long time at this circulation ratio.

**[Table 1]**

| Screen (mm) | 4.75 or more | 4.0 or more | 4.0 to 3.0 | 3.0 to 2.0 | 2.0 to 1.0 | 1.0 to 0.5 | 0.5 to 0.15 | 0.15 or less |
|---|---|---|---|---|---|---|---|---|
| Ratio (%) | 0.0 | 0.2 | 13.5 | 17.4 | 25.2 | 15.0 | 22.6 | 6.2 |

Average Granule Size: 1.2 mm
Reaction Temperature: 127 °C
Generation Yield: 96.0 %
Remaining Carbides: 900 ml/kg

The reaction temperature indicated here is a solid phase temperature inside the generator when 3 equivalents of water are sprayed to the carbide and acetylene gas is being generated. As the temperature increases, the security risk rises. Also, the generation yield is a value when the generated gas amount is divided by the theoretical generation amount (the used carbide amount x the generated acetylene gas amount). As this value is higher, it is indicated that the acetylene gas is being generated more efficiently. Further, the remaining carbide is a value indicating, as a generated acetylene gas amount, a carbide amount remaining in hydrated lime without reacting. As this value is lower, it is indicated that the carbide is being used more effectively. On the other hand, when the value is high, the security risk would increase at a post process of the hydrated lime.

### Comparative Example 1

In the impact crushing machine 20, the clearance of the upper stage between the hitting plates 22a of the rotor 22 and the breaking liners 23a of the breaking plates 23 was set to 40 mm, the clearance of the lower stage was set to 20 mm, and the rotation number of the rotor 22 was set to 45 m/s (650 rpm). Then, the carbides were introduced at 27 t/h from the feed port 21a. The carbide amount that has passed through the screen 30 after being crushed by the impact crushing machine 20 became 15 t/h, and therefore the circulation ratio was (27-15)/15 = 0.8. The table 2 shows a granularity distribution (based on the mass) of the carbide granules (having passed through the screen 30) obtained by operating the impact crushing machine 20 for a long time at this circulation ratio.

**[Table 2]**

| Screen (mm) | 4.75 or more | 4.0 or more | 4.0 to 3.0 | 3.0 to 2.0 | 2.0 to 1.0 | 1.0 to 0.5 | 0.5 to 0.15 | 0.15 or less |
|---|---|---|---|---|---|---|---|---|
| Ratio (%) | 0.0 | 0.1 | 5.2 | 11.3 | 15.0 | 24.5 | 20.3 | 23.6 |

Average Granule Size: 0.6 mm
Reaction Temperature: 147 °C
Generation Yield: 94.3 %
Remaining Carbide: 300 ml/kg

In this case, the carbide is excessively fine, increasing the reaction temperature and the security risk.

### Comparative Example 2

In the impact crushing machine 20, the clearance of the upper stage between the hitting plates 22a of the rotor 22 and the breaking liners 23a of the breaking plates 23 was set to 60 mm, the clearance of the lower stage was set to 35 mm, and the rotation number of the rotor 22 was set to 45 m/s (650 rpm). Then, the carbides were introduced at 60 t/h from the feed port 21a. The carbide amount that has passed through the screen 30 after being crushed by the impact crushing machine 20 became 15 t/h, and therefore the circulation ratio was (60-15)/15 = 3.0. The table 3 shows a granularity distribution (based on the mass) of the carbide granules (having passed through the screen 30) obtained by operating the impact crushing machine 20 for a long time at this circulation ratio.

**[Table 3]**

| Screen (mm) | 4.75 or more | 4.0 or more | 4.0 to 3.0 | 3.0 to 2.0 | 2.0 to 1.0 | 1.0 to 0.5 | 0.5 to 0.15 | 0.15 or less |
|---|---|---|---|---|---|---|---|---|
| Ratio (%) | 1.5 | 4.2 | 25.2 | 17.5 | 21.5 | 15.5 | 12.4 | 2.2 |

Average Granule Size: 1.7 mm
Circulation Ratio: 3.0
Reaction Temperature: 119 °C
Generation Yield: 94.5 %
Remaining Carbide: 2500 ml/kg

In this case, the remaining non-reactive carbide is great, which may reduce the yield of the acetylene gas.

### Example 2

In the impact crushing machine 20, the clearance of the upper stage between the hitting plates 22a of the rotor 22 and the breaking liners 23a of the breaking plates 23 was set to 55 mm, the clearance of the lower stage was set to 32 mm, and the rotation number of the rotor 22 was set to 45 m/s (650 rpm). Then, the carbides were introduced at 52.5 t/h from the feed port 21a. The carbide amount that has passed through the screen 30 after being crushed by the impact crushing machine 20 became 15 t/h, and therefore the circulation ratio was (52.5-15)/15 = 2.5. The table 4 shows a granularity distribution (based on the mass) of the carbide granules (having passed through the screen 30) obtained by operating the impact crushing machine 20 for a long time at this circulation ratio.

**[Table 4]**

| Screen (mm) | 4.75 or more | 4.0 or more | 4.0 to 3.0 | 3.0 to 2.0 | 2.0 to 1.0 | 1.0 to 0.5 | 0.5 to 0.15 | 0.15 or less |
|---|---|---|---|---|---|---|---|---|
| Ratio (%) | 1.2 | 3.8 | 21.7 | 18.8 | 21.5 | 15.4 | 14.1 | 3.5 |

Average Granule Size: 1.5 mm
Circulation Ratio: 2.5
Reaction Temperature: 122 °C
Generation Yield: 95.66 %
Remaining Carbide: 1500 ml/kg

### Example 3

In the impact crushing machine 20, the clearance of the upper stage between the hitting plates 22a of the rotor 22 and the breaking liners 23a of the breaking plates 23 was set to 45 mm, the clearance of the lower stage was set to 22 mm, and the rotation number of the rotor 22 was set to 45 m/s (650 rpm). Then, the carbides were introduced at 30 t/h from the feed port 21a. The carbide amount that has passed through the screen 30 after being crushed by the impact crushing machine 20 became 15 t/h, and therefore the circulation ratio was (30-15)/15 = 1.0. The table 5 shows a granularity distribution (based on the mass) of the carbide granules (having passed through the screen 30) obtained by operating the impact crushing machine 20 for a long time at this circulation ratio.

**[Table 5]**

| Screen (mm) | 4.75 or more | 4.0 or more | 4.0 to 3.0 | 3.0 to 2.0 | 2.0 to 1.0 | 1.0 to 0.5 | 0.5 to 0.15 | 0.15 or less |
|---|---|---|---|---|---|---|---|---|
| Ratio (%) | 0.0 | 0.1 | 6.3 | 15.5 | 19.7 | 21.1 | 17.3 | 20.0 |

Average Granule Size: 0.8 mm
Circulation Ratio: 1.0
Reaction Temperature: 138 °C
Generation Yield: 95.4 %
Remaining Carbide: 500 ml/kg

### DESCRIPTION OF REFERENCE NUMBERS

- 4, 6: Iron Removing Machine
- 10: Stock Tank
- 20: Impact Crushing Machine
- 21: Casing
- 22: Rotor
- 22a: Hitting Plate
- 22b: Rotor Shaft
- 23a: Breaking Liner
- 25a, 25b: Bearing
- 26: Oil Cooler Unit
- 27a, 27b: Feed Line
- 28a, 28b: Return Line
- 30: Screen
- 40: Return Path
- 50: Raw Material Tank
- 60: Flow Conveyer
- 61: Casing
- 62: Forth Path
- 63: Back Path
- 64: Partition
- 64a: Communicating Port
- 70: Raw Material Sealing Tank
- 80: Return Tank

## Claims

1. A method for producing calcium carbide granules wherein a content of the granules having granule size of 4 mm or more is 5 wt% or less and a content of the granules having granule size of 0.15 mm or less is 20 wt% or less, the method comprising:
A) crushing calcium carbides by an impact crushing machine;
B) passing the calcium carbide crushed by the impact crushing machine through a screen having a mesh size of 4 mm; and
C) reintroducing the calcium carbides remaining on the screen into the impact crushing machine again,
wherein:
- the steps A, B and C are carried out in an inactive gas atmosphere, and
- the granularity as crushed by the impact crushing machine is controlled such that a calcium carbide amount *a* which is introduced into the impact crushing machine at the step A and a calcium carbide amount b which has passed through the screen at the step B have a relation of (*a-b*)/*b* = 1 to 2.5.

2. The method according to claim 1, including a step of removing foreign substances from the calcium carbides after the step A and before the step B.

## Patentansprüche

1. Verfahren zum Herstellen von Calciumcarbidgranulaten, wobei ein Gehalt der Granulate mit einer Granulatgröße von 4 mm oder mehr 5 Gew.-% oder weniger beträgt und ein Gehalt der Granulate mit einer Granulatgröße von 0,15 mm oder weniger 20 Gew.-% oder weniger beträgt, wobei das Verfahren umfasst:
A) Zerkleinern von Calciumcarbiden mithilfe eines Prallbrechers:
B) Passieren des mithilfe des Prallbrechers zerkleinerten Calciumcarbids durch ein Sieb mit einer Maschenweite von 4 mm; und
C) Rückführen der Calciumcarbide, die auf dem Sieb zurückbleiben, erneut in den Prallbrecher,
wobei:
- die Schritte A, B und C unter inaktiver Gasatmosphäre durchgeführt werden, und
- die Granularität nach Zerkleinern mit dem Prallbrecher so gesteuert wird, dass eine Calcimcarbidmenge a, die in Schritt A in den Prallbrecher eingebracht wird, und eine Calciumcarbidmenge *b,* die das Sieb in Schritt B passiert hat, eine Beziehung von (*a* - *b*) / *b* = 1 bis 2,5 aufweisen.

2. Verfahren nach Anspruch 1, wobei ein Schritt des Entfernens von Fremdsubstanzen aus den Calciumcarbiden nach Schritt A und vor Schritt B durchgeführt wird.

## Revendications

1. Procédé de production de granulés de carbure de calcium dans lequel une teneur en granulés ayant une taille de granulé de 4 mm ou plus est de 5 % en poids ou moins et une teneur en granulés ayant une taille de granulé de 0,15 mm ou moins est de 20 % en poids ou moins, le procédé comprenant :
A) le broyage des carbures de calcium par une machine de broyage à percussion ;
B) le passage du carbure de calcium broyé par la machine de broyage à percussion à travers un tamis ayant une taille de maille de 4 mm ; et
C) la réintroduction des carbures de calcium restant sur le tamis dans la machine de broyage à percussion,
dans lequel :
- les étapes A, B et C sont réalisées dans une atmosphère gazeuse inactive, et
- la granularité obtenue par broyage à la machine de broyage à percussion est régulée de telle sorte qu'une quantité de carbure de calcium a qui est introduite dans la machine de broyage à percussion à l'étape A et une quantité de carbure de calcium *b* qui a traversé le tamis à l'étape B présentent une relation de (*a-b*)/*b* = 1 à 2,5.

2. Procédé selon la revendication 1, comprenant une étape d'élimination de substances étrangères des carbures de calcium après l'étape A et avant l'étape B.
